(19) Europäisches Patentamt / European Patent Office / Office européen des brevets

(11) **EP 3 608 834 A1**

(12) **DEMANDE DE BREVET EUROPEEN**

(43) Date de publication:
**12.02.2020 Bulletin 2020/07**

(51) Int Cl.:
***G06K 9/00*** *(2006.01)*

(21) Numéro de dépôt: **19189490.6**

(22) Date de dépôt: **31.07.2019**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **10.08.2018 FR 1857460**

(71) Demandeur: **Idemia Identity & Security France
92400 Courbevoie (FR)**

(72) Inventeurs:
• **IATSUN, Iana
  92400 COURBEVOIE (FR)**
• **KAZDAGHLI, Laurent
  92400 COURBEVOIE (FR)**

(74) Mandataire: **Lavaud, Thomas et al
Cabinet Boettcher
16, rue Médéric
75017 Paris (FR)**

(54) **PROCEDE D'ANALYSE D'UNE EMPREINTE**

(57)     Procédé d'analyse d'une empreinte, comportant l'étape d'acquérir une image d'empreinte (20) ainsi que les étapes de :
- mettre en oeuvre sur l'image d'empreinte un traitement par filtrage pour estimer, pour chaque pixel de l'image d'empreinte, une première fréquence de crêtes (21) dans l'empreinte, et produire grâce aux premières fréquences associées aux pixels de l'image d'empreinte une première carte de fréquences (22) de l'image d'empreinte ;
- diviser l'image d'empreinte en une pluralité de fenêtres comprenant chacune une pluralité de pixels, calculer une Transformée de Fourrier de chaque fenêtre pour estimer une deuxième fréquence des crêtes pour tous les pixels de ladite fenêtre, et produire grâce aux deuxièmes fréquences associées aux pixels des fenêtres une deuxième carte de fréquences de l'image d'empreinte ;
- fusionner la première carte de fréquences et la deuxième carte de fréquences pour obtenir une carte de fréquences consolidées de l'image d'empreinte.

Fig. 4

# Description

L'invention concerne le domaine des procédés d'analyse d'empreintes.

ARRIERE PLAN DE L'INVENTION

L'utilisation de moyens de reconnaissance biométrique est de plus en plus fréquente pour protéger l'accès à des zones sécurisées : entreprises, banques, aéroports, prisons, etc.

Il est en particulier possible d'identifier et d'authentifier une personne grâce à ses empreintes digitales, qui sont uniques.

Une image d'empreinte, représentative d'une empreinte digitale et acquise par un capteur, par exemple un capteur optique, thermique ou à ultrasons, peut être vue comme une alternance de crêtes et de vallées.

Une image d'empreinte comprend aussi un certain nombre de points caractéristiques, ou minuties, qui correspondent par exemple à la fin d'une crête ou à la division en deux d'une crête (bifurcation). Pour comparer efficacement et de manière fiable deux images d'empreinte et donc deux jeux de minuties, il convient au préalable d'estimer précisément la fréquence locale des crêtes. En effet, en cas de mauvaise estimation de la fréquence locale des crêtes, un doublement de crêtes peut apparaître. Les fausses crêtes produisent des minuties inexistantes qui tendent à fausser l'identification et l'authentification.

Or, une évaluation précise de la fréquence locale des crêtes peut parfois être complexe à réaliser. De manière générale, l'obstacle principal pour évaluer précisément la fréquence locale des crêtes est la mauvaise qualité des images d'empreinte. La structure dégradée d'une image d'empreinte complexifie l'analyse des données obtenues. L'estimation de la fréquence locale peut devenir impossible en cas de présence de bruit sur l'image d'empreinte, ou bien en cas de présence d'une cicatrice.

D'autres phénomènes peuvent dégrader la précision de l'estimation de la fréquence locale des crêtes : présence de pores, changement fréquent de direction des crêtes, différence importante de la distance entre les crêtes d'une personne à l'autre, variation de la fréquence locale de manière significative au sein d'une même empreinte, différence de période des crêtes et des vallées, bruit, etc.

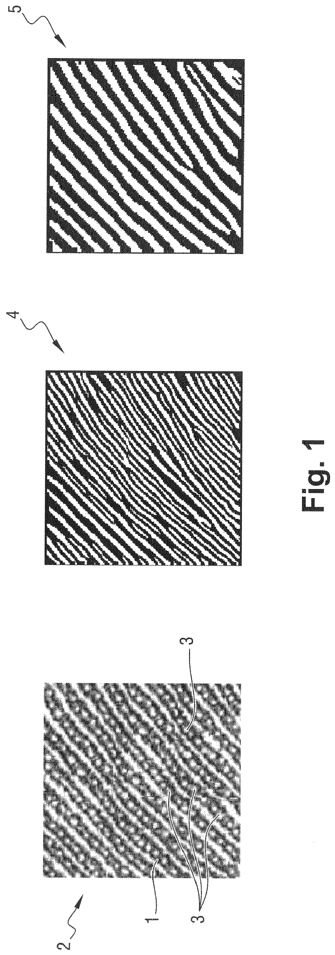

Ainsi, en référence à la figure 1, on distingue sur les crêtes 1 d'une image d'empreinte 2 des pores 3 dilatés de la peau, qui présentent une ouverture importante à cause de la chaleur. Sur l'image traitée 4, obtenue à partir de l'image d'empreinte 2 grâce à une première méthode d'analyse connue, on constate qu'un certain nombre de crêtes sont doublées du fait de la mauvaise estimation de la fréquence locale des crêtes. On peut comparer cette image traitée 4 à une image attendue 5, traitée efficacement, qui ne présente pas ce doublement des crêtes. On voit bien que, par rapport à l'image attendue 5, l'image traitée 4 est dégradée de manière importante.

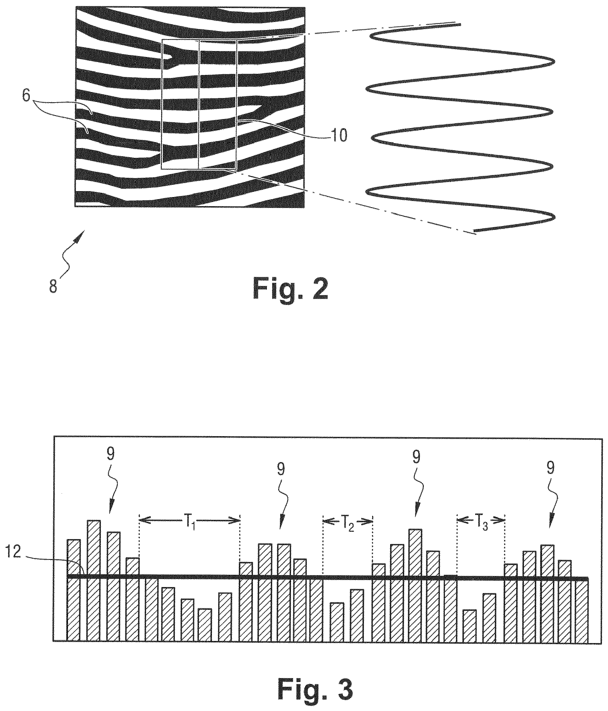

Pour estimer précisément la fréquence locale des crêtes, il a été envisagé de mettre en oeuvre une deuxième méthode d'analyse connue, que l'on décrit en référence aux figures 2 et 3.

La fréquence locale des crêtes 6 dans un échantillon d'une image d'empreinte 8 est définie comme étant égale au nombre de crêtes 6 par la longueur de l'échantillon selon un axe orthogonal à un axe d'orientation locale des crêtes 6. La fréquence locale est différente entre deux empreintes digitales, mais elle peut aussi varier au sein d'une même empreinte digitale.

La deuxième méthode d'analyse connue de la fréquence locale utilise l'information sur le nombre de pixels entre deux pics 9 de niveaux de gris.

La détermination de ces niveaux de gris est réalisée en deux étapes principales qui utilisent des fenêtres glissantes 10. Tout d'abord, l'orientation locale des crêtes 6 est estimée dans chaque fenêtre glissante 10. Elle est calculée comme étant égale au rapport entre les réponses des gradients d'intensité obtenues par un filtre de Sobel en direction verticale et horizontale. Ensuite, une fenêtre glissante 10, orientée dans le sens de l'orientation globale des crêtes 6, est placée autour de chaque pixel. Pour chaque colonne de la fenêtre glissante 10, les valeurs de pixels sont accumulées. Ainsi, la distance entre deux pics 9 représente la distance entre les crêtes 6.

On nomme $T_1$, $T_2$ et $T_3$ les distances entre trois pics 9 successifs. Ces distances correspondant à des intervalles dans lesquels les niveaux de gris sont inférieurs à un seuil prédéterminé 12.

On estime la fréquence locale en utilisant la formule :

$$f = \frac{1}{T_1 + T_2 + T_3}.$$

Le point faible de cette méthode est que la détermination de la fréquence locale est peu précise lorsque l'image d'empreinte est floue ou de mauvaise qualité.

OBJET DE L'INVENTION

L'invention a pour objet d'améliorer l'estimation de la fréquence des crêtes d'une image d'empreinte représentative d'une empreinte.

RESUME DE L'INVENTION

En vue de la réalisation de ce but, on propose un procédé d'analyse d'une empreinte, comportant l'étape d'acquérir, en utilisant au moins un capteur, une image d'empreinte représentative de l'empreinte, ainsi que les étapes, réalisées par au moins une unité électrique de traitement, de :

- mettre en oeuvre sur l'image d'empreinte un traitement par filtrage pour estimer, pour chaque pixel de l'image d'empreinte, une première fréquence de crêtes dans l'empreinte, et produire grâce aux premières fréquences associées aux pixels de l'image d'empreinte une première carte de fréquences de l'image d'empreinte ;
- diviser l'image d'empreinte en une pluralité de fenêtres comprenant chacune une pluralité de pixels, calculer une Transformée de Fourrier de chaque fenêtre pour estimer une deuxième fréquence des crêtes pour tous les pixels de ladite fenêtre, et produire grâce aux deuxièmes fréquences associées aux pixels des fenêtres une deuxième carte de fréquences de l'image d'empreinte ;
- fusionner la première carte de fréquences et la deuxième carte de fréquences pour obtenir une carte de fréquences consolidées de l'image d'empreinte.

La mise en oeuvre combinée du traitement par filtrage et de l'analyse du spectre de la Transformée de Fourrier, ainsi que la fusion de la première carte de fréquences et de la deuxième carte de fréquences, permettent d'estimer très précisément la fréquence des crêtes de l'image d'empreinte.

On propose aussi un système comprenant au moins un capteur et au moins une unité électrique de traitement, dans lequel est mis en oeuvre un procédé d'analyse tel que celui qui vient d'être décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

- la figure 1 représente une image d'empreinte, une image traitée et une image attendue ;
- la figure 2 représente une image d'empreinte et une fenêtre glissante ;
- la figure 3 est un graphique représentant des niveaux de gris associés à la figure 2 ;
- la figure 4 représente une image d'empreinte et une carte de premières fréquences ;
- la figure 5 représente une image d'empreinte, des fenêtres de l'image d'empreinte, et des Transformées de Fourrier des fenêtres calculées lors de la mise en oeuvre du procédé d'analyse selon l'invention ;
- la figure 6 représente une fenêtre, la Transformée de Fourrier, la mise en oeuvre d'une fonction de distribution radiale, et un graphique comprenant une courbe de la fonction de distribution radiale ;
- la figure 7 représente une image d'empreinte et une carte de deuxièmes fréquences ;
- la figure 8 représente une image d'empreinte, une carte de premières fréquences, une carte de deuxièmes fréquences et une carte de fréquences consolidées ;
- la figure 9 représente une image d'empreinte, une première image traitée uniquement avec un traitement par filtrage, et une deuxième image traitée avec le procédé d'analyse selon l'invention.

DESCRIPTION DETAILLEE DE L'INVENTION

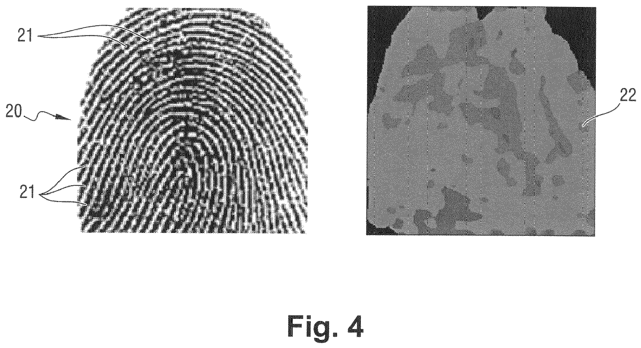

En référence à la figure 4, le procédé d'analyse selon l'invention consiste tout d'abord à acquérir une image d'empreinte 20 représentative d'une empreinte d'un individu. L'empreinte est ici une empreinte digitale, mais il pourrait s'agir d'une empreinte papillaire différente, par exemple une empreinte de la paume.

L'image d'empreinte 20 est acquise grâce à un capteur qui est par exemple un capteur optique, un capteur thermique, un capteur à ultrasons, etc.

Le procédé d'analyse comporte ensuite un certain nombre d'étapes qui sont toutes réalisées par une unité électrique de traitement. Par « unité électrique de traitement », on entend tout type d'équipement électrique fixe ou mobile, qui comprend un ou plusieurs composants de traitement (microcontrôleur, processeur, FPGA, DSP, etc.) adapté à exécuter des instructions d'un programme pour réaliser les tâches qui lui sont dédiées (et, notamment, pour mettre en oeuvre au moins partiellement le procédé d'analyse selon l'invention). On note qu'il est possible de réaliser ces étapes non pas dans une mais dans plusieurs unités électriques de traitement, possiblement connectées les unes aux autres par tout type de moyen de connexion (filaire, sans-fil, en réseau, etc.). Bien sûr, l'unité de traitement est capable d'acquérir l'image d'empreinte 20 produite par le capteur.

On met tout d'abord en oeuvre sur l'image d'empreinte 20 un traitement par filtrage pour estimer, pour chaque pixel de l'image d'empreinte 20, une première fréquence des crêtes 21 dans l'empreinte. Le traitement par filtrage utilise ici un banc de filtres. Le banc de filtres est en l'occurrence un banc de filtres de Gabor.

Le traitement par filtrage est réalisé par un codeur qui attribue à chaque pixel une valeur de première fréquence comprise dans une liste finie de valeurs prédéfinies. Ici, la liste comprend trois valeurs.

On produit alors grâce aux premières fréquences associées aux pixels de l'image d'empreinte 20 une première carte de fréquences 22 de l'image d'empreinte 20. Sur la première carte de fréquences 22, le niveau de gris de chaque pixel correspond à la première fréquence qui lui est associée (c'est-à-dire à l'une des trois valeurs de la liste).

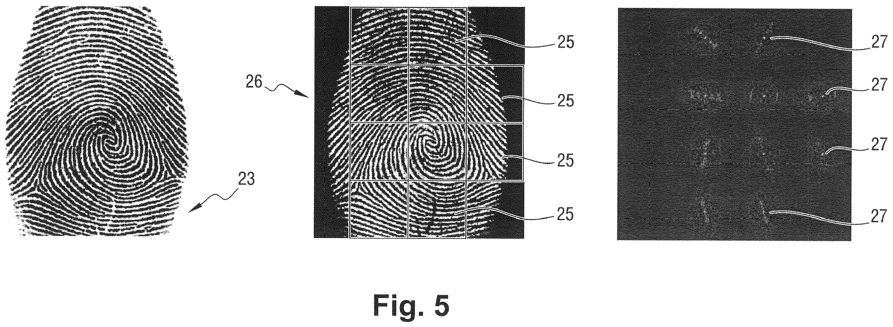

En référence à la figure 5, l'image d'empreinte 23 est par ailleurs divisée en une pluralité de fenêtres 25 qui comprennent chacune une pluralité de pixels. Ici, chaque fenêtre 25 comporte 128x128 pixels. Au moins deux fenêtres 25 se chevauchent ; ici, en l'occurrence, toutes les fenêtres 25 adjacentes se chevauchent.

L'image d'empreinte 23 est aussi traitée par application d'un masque de manière à éliminer le fond. Ainsi, sur l'image d'empreinte 26, l'empreinte digitale est détachée de son fond. Les opérations qui suivent sont mises en oeuvre uniquement sur l'empreinte digitale et non sur le fond.

Une Transformée de Fourrier 27 est appliquée sur chaque fenêtre 25 de l'image d'empreinte 26.

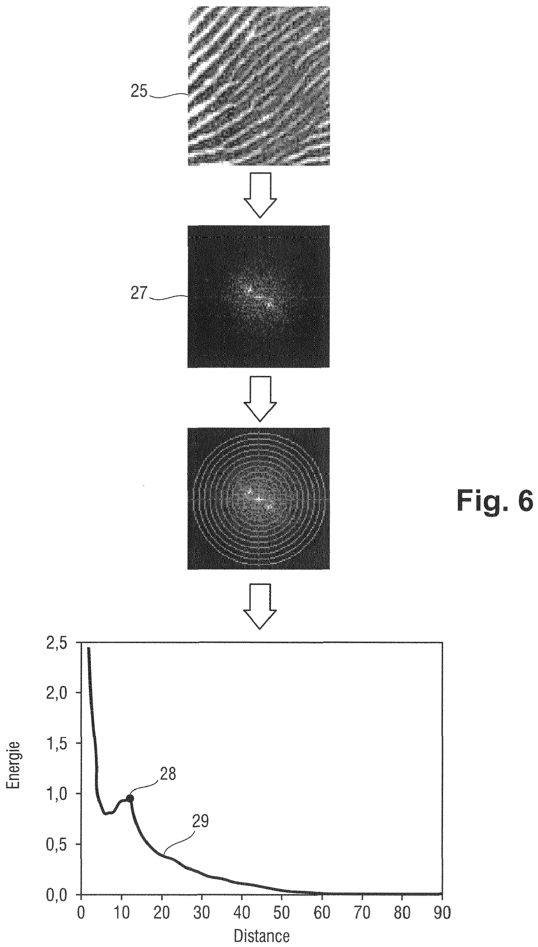

Puis, en référence à la figure 6, pour chaque fenêtre 25, un spectre de la Transformée de Fourrier 27 est analysé. L'analyse consiste tout d'abord à calculer une fonction de distribution radiale du spectre de la Transformée de Fourrier 27.

On identifie alors, pour chaque fenêtre 25, le ou les pics 28 (ou « pics d'énergie ») de la courbe 29 de la fonction de distribution radiale. La fréquence correspondant à chaque pic 28 de la fenêtre 25 est appelée « fréquence de fenêtre ». Plusieurs fréquences de fenêtre peuvent donc être associées à une même fenêtre 25.

Puis, une deuxième fréquence des crêtes est associée à chaque pixel de chaque fenêtre 25 de l'image d'empreinte. Lorsqu'une seule fréquence de fenêtre est associée à un même pixel, la deuxième fréquence du pixel prend la valeur de la fréquence de fenêtre.

Il est cependant possible que plusieurs fréquences de fenêtre soient associées à un même pixel. Ceci résulte notamment du fait que plusieurs fréquences de fenêtre peuvent être associées à une même fenêtre 25, mais aussi du fait des chevauchements entre les fenêtre 25, qui ont pour conséquence que certains pixels appartiennent à plusieurs fenêtres 25.

Lorsque plusieurs fréquences de fenêtre sont associées à un même pixel, la deuxième fréquence dudit pixel est estimée en déterminant une valeur médiane de ces fréquences de fenêtres.

On utilise la formule :

$$F2 = Median(f_1, f_2, f_{...}, f_n),$$

où F2 est la deuxième fréquence associée à un pixel où et les f1, f2, f..., fn sont les fréquences de fenêtre associées audit pixel.

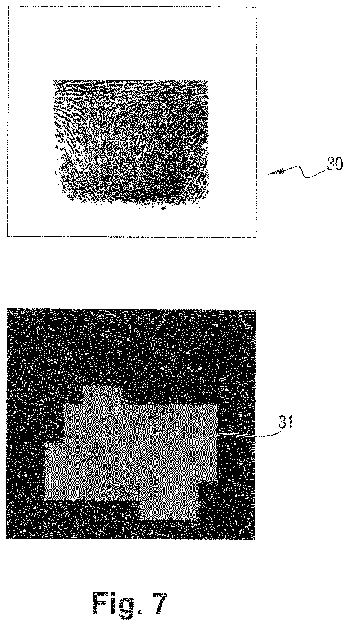

En référence à la figure 7, on produit grâce aux deuxièmes fréquences associées aux pixels des fenêtres de l'image d'empreinte 30 une deuxième carte de fréquences 31. L'image d'empreinte 30 est de taille réduite par rapport à l'image d'empreinte 20. La deuxième carte de fréquences 31 présente la même taille que l'image d'empreinte 30. On voit bien sur la deuxième carte de fréquences 31 que le changement de fréquence est homogène. On ne distingue pas de changement abrupt de fréquence, ce qui correspond bien à la réalité.

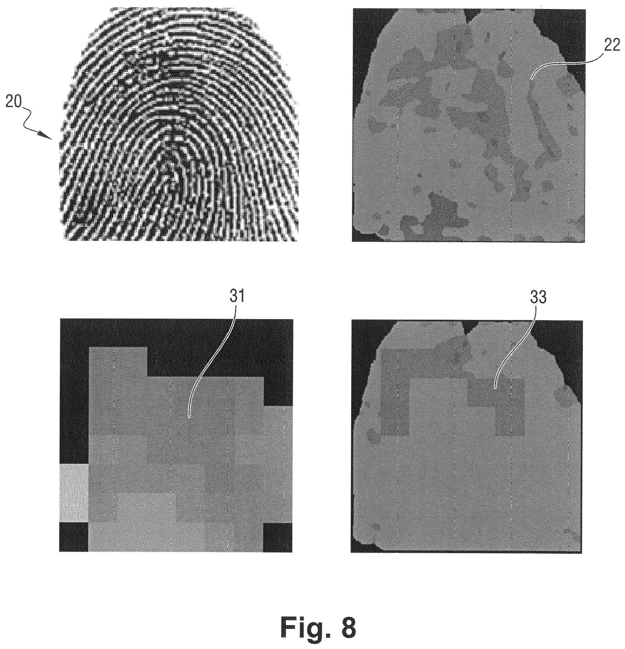

En référence à la figure 8, on fusionne ensuite la première carte de fréquences 22 et la deuxième carte de fréquences 31.

La fusion consiste, pour un pixel donné, à associer audit pixel donné une fréquence optimisée égale à une valeur de la liste de valeurs prédéfinie la plus proche de la deuxième fréquence. Pour les pixels auxquels aucune deuxième fréquence n'est associée, la fréquence optimisée est égale à la première fréquence.

On obtient ainsi une carte de fréquences consolidées 33 de l'image d'empreinte 20.

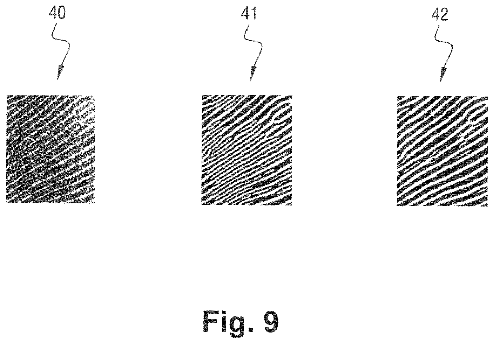

En référence à la figure 9, on peut comparer une image d'empreinte 40 acquise par le capteur, une première image traitée 41 obtenue en mettant uniquement en oeuvre un traitement par filtrage, et une deuxième image traitée 42 obtenue avec le procédé d'analyse selon l'invention.

Les fréquences locales des crêtes de la deuxième image traitée 42 sont beaucoup plus proches de celles de l'image d'empreinte 40 que les fréquences locales des crêtes de la première image traitée 41. La deuxième image traitée 42 est plus précise et plus propre. En particulier, alors que la première image traitée 41 comporte des zones 43 de redoublement des crêtes, ce n'est pas le cas de la première image traitée.

La seule mise en oeuvre du traitement par filtrage est une méthode qui possède de nombreux points faibles. Puisque le nombre de filtres est limité, dès que la fréquence des crêtes est supérieure ou inférieure à la fréquence attendue, les calculs deviennent erronés. Le redoublement des crêtes peut alors se produire et dégrader par la suite le reste du traitement. Les filtres sont également sensibles aux dégradations présentes sur l'image d'empreinte. La présence de cicatrices peut modifier leurs réponses. Par contre, les temps de calcul des filtres restent raisonnables par rapport à l'approche spectrale. On note que la présence d'une imperfection sur l'image d'empreinte n'empêche pas la détection des pics d'énergie. On combine donc les avantages des deux méthodes dans le procédé d'analyse selon l'invention, ce qui permet d'obtenir un procédé d'analyse précis, efficace, avec des temps de traitement réduits.

L'invention n'est pas limitée au mode de mise en oeuvre particulier qui vient d'être décrit, mais, bien au contraire, couvre toute variante entrant dans le cadre de l'invention telle que définie par les revendications.

On note qu'il serait possible de mettre en oeuvre l'approche spectrale uniquement dans certaines zones de l'image d'empreinte. Ces zones sont par exemple des zones comprenant de brusques changements de la fréquence des crêtes.

**Revendications**

1. Procédé d'analyse d'une empreinte, comportant l'étape d'acquérir, en utilisant au moins un capteur, une image d'empreinte (20, 23, 40) représentative de l'empreinte, ainsi que les étapes, réalisées par au moins une unité électrique de traitement, de :

- mettre en oeuvre sur l'image d'empreinte un traitement par filtrage pour estimer, pour chaque pixel de l'image d'empreinte, une première fréquence de crêtes (21) dans l'empreinte, et produire grâce aux premières fréquences associées aux pixels de l'image d'empreinte une première carte de fréquences (22) de l'image d'empreinte ;
- diviser l'image d'empreinte en une pluralité de fenêtres (25) comprenant chacune une pluralité de pixels, calculer une Transformée de Fourrier de chaque fenêtre pour estimer une deuxième fréquence des crêtes pour tous les pixels de ladite fenêtre, et produire grâce aux deuxièmes fréquences associées aux pixels des fenêtres une deuxième carte de fréquences (31) de l'image d'empreinte ;
- fusionner la première carte de fréquences et la deuxième carte de fréquences pour obtenir une carte de fréquences consolidées (33) de l'image d'empreinte.

2. Procédé d'analyse selon la revendication 1, dans lequel, pour chaque fenêtre (25), l'estimation de la deuxième fréquence d'un pixel comporte les étapes de calculer une fonction de distribution radiale d'un spectre de la Transformée de Fourrier (27) de la fenêtre, d'identifier au moins un pic (28) de la fonction de distribution radiale, et de définir au moins une fréquence de fenêtre correspondant au pic.

3. Procédé d'analyse selon la revendication 2, dans lequel, lorsqu'une seule fréquence de fenêtre est associée à un même pixel, la deuxième fréquence du pixel prend la valeur de la fréquence de fenêtre, et lorsque plusieurs fréquences de fenêtre sont associées au même pixel, la deuxième fréquence dudit pixel est estimée en déterminant une valeur médiane de ces fréquences de fenêtres.

4. Procédé d'analyse selon l'une des revendications précédentes, dans lequel au moins deux fenêtres (25) se chevauchent.

5. Procédé d'analyse selon l'une des revendications précédentes, dans lequel, pour chaque pixel, la valeur de la première fréquence attribuée audit pixel est comprise dans une liste finie de valeurs prédéfinies, et dans lequel l'étape de fusion de la première carte de fréquences (22) et de la deuxième carte de fréquences (31) consiste, pour un pixel donné, à associer audit pixel donné une fréquence optimisée égale à la valeur prédéfinie de la liste finie, qui est la plus proche de la deuxième fréquence du pixel.

6. Procédé d'analyse selon l'une des revendications précédentes, dans lequel le traitement par filtrage utilise un banc de filtres.

7. Procédé d'analyse selon l'une des revendications précédentes, dans lequel le banc de filtres est un banc de filtres de Gabor.

8. Système comprenant au moins un capteur et au moins une unité électrique de traitement, dans lequel est mis en oeuvre un procédé d'analyse selon l'une des revendications précédentes.

**Fig. 1**

EP 3 608 834 A1

**Fig. 2**

**Fig. 3**

**Fig. 4**

Fig. 5

**Fig. 6**

**Fig. 7**

Fig. 8

40   41   42

# Fig. 9

Europäisches Patentamt
European Patent Office
Office européen des brevets

# RAPPORT DE RECHERCHE EUROPEENNE

Numéro de la demande

EP 19 18 9490

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 799 098 A (ORT JAMES R [US] ET AL) 25 août 1998 (1998-08-25) | 1-4,6-8 | INV. G06K9/00 |
| Y | * colonne 6, ligne 6 - ligne 15 * * colonne 15, ligne 45 - colonne 16, ligne 6 * * colonne 18, ligne 48 - colonne 20, ligne 32 * * colonne 30, ligne 36 - colonne 31, ligne 23 * ----- | 5 | |
| Y | FR 2 865 057 A1 (ZEFYR TRECHNOLOGIES [FR]) 15 juillet 2005 (2005-07-15) * page 6, ligne 23 - page 8, ligne 21 * ----- | 5 | |

DOMAINES TECHNIQUES RECHERCHES (IPC)

G06K

Le présent rapport a été établi pour toutes les revendications

| Lieu de la recherche | Date d'achèvement de la recherche | Examinateur |
|---|---|---|
| La Haye | 8 janvier 2020 | Angelopoulou, Maria |

**ANNEXE AU RAPPORT DE RECHERCHE EUROPEENNE**
**RELATIF A LA DEMANDE DE BREVET EUROPEEN NO.**

EP 19 18 9490

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-01-2020

| Document brevet cité au rapport de recherche | | Date de publication | Membre(s) de la famille de brevet(s) | | Date de publication |
|---|---|---|---|---|---|
| US 5799098 | A | 25-08-1998 | US | 5659626 A | 19-08-1997 |
| | | | US | 5799098 A | 25-08-1998 |
| | | | US | 5926555 A | 20-07-1999 |
| FR 2865057 | A1 | 15-07-2005 | EP | 1706840 A2 | 04-10-2006 |
| | | | FR | 2865057 A1 | 15-07-2005 |
| | | | WO | 2005071602 A2 | 04-08-2005 |

EPO FORM P0460

Pour tout renseignement concernant cette annexe : voir Journal Officiel de l'Office européen des brevets, No.12/82